# DEMANDE DE BREVET EUROPEEN

(11) **EP 0 762 786 A1**
(43) Date de publication de la demande: **12.03.1997**
(21) Numéro de dépôt: 96401892.3
(22) Date de dépôt: 04.09.1996
(51) Int. Cl.: H04Q 3/00

(54) **Système de gestion des télécommunications**

(30) Priorité: 11.09.1995 FR 9510606
(71) Demandeur: ALCATEL CIT, 75008 Paris (FR)
(72) Inventeur: Vilain, Bernard, 92190 Meudon (FR); Pontailler, Catherine, 22700 Perros-Guirec (FR); Cimadevilla, Candido, 92330 Sceaux (FR)
(74) Mandataire: Pothet, Jean Rémy Emile Ludovic

(57) **Abrégé**

Il comprend des centres de gestion (CG1) fournissant les services de gestion, qui communiquent, par des messages de gestion, dans les deux sens, avec des éléments de réseau de télécommunications (NE1, NEn...) d'un réseau de télécommunications (RT), ainsi qu'un point de transfert de messages de gestion (PTMG), avec lequel communiquent, chacun selon ses propres spécificités, les centres de gestion comme les éléments de réseau de télécommunications.

Le point de transfert de message (PTMG) comprend plusieurs dispositifs de transfert de messages de gestion (DTMG1, DTMG2) chacun d'eux desservant un ensemble d'applications de gestion (EAG1, EAGk) et chaque élément de réseau de télécommunications (NE1, NEn...) associé à un ensemble d'applications de gestion (EAG1) possède une interface (IN1) pour communiquer avec le dispositif de transfert de messages de gestion (DTMG1) desservant cet ensemble.

## Description

La présente invention concerne un système de gestion des télécommunications.

On trouvera une description d'un système de gestion de télécommunications dans les publications de la série "M30-M3000" des recommandations de l'ITU-T (Internation Telecommunication Union - Telecommunication).

Un système de gestion des télécommunications, ou encore un réseau de gestion des télécommunications, permet à l'opérateur d'un réseau de télécommunications, fournissant des services de télécommunications à des usagers, de mettre en oeuvre, en relation avec ce réseau, des services de gestion qui, pour l'essentiel, consistent à prélever des informations dans ce réseau, par exemple relatives aux services fournis (à des fins de taxation par exemple), à la qualités de ces services (délais d'attente, fautes ou défaillances, par exemple), aux conditions de fourniture de ces services (statistiques de tous ordres), ou encore à introduire des informations dans ce réseau, relatives à la configuration du réseau de télécommunications et de ses équipements, aux services fournis et à leurs modalités, etc.

Ce système de gestion des télécommunications, structurellement, est basé sur l'emploi de centres de gestion fournissant les services de gestion, qui doivent communiquer, dans les deux sens, avec des éléments de réseau de télécommunications du réseau de télécommunications. Plus précisément, un ou plusieurs centres de gestion (OS, pour Operations System, dans la terminologie anglo-saxonne) doivent communiquer avec différents éléments du réseau de télécommunications (NE, pour Network Element, dans la terminologie anglo-saxonne). Chacun des OS fournit un ou plusieurs services de gestion, chacun mis en oeuvre à l'aide d'une "application" de gestion.

Pour ce faire, ce système de gestion des télécommunications comprend un réseau de commutation de données de gestion, séparé du réseau de télécommunications qu'il s'agit de gérer, auquel sont reliés les différents OS et les différents NE et qui est chargé d'acheminer des messages de gestion supportant les communications requises entre OS et NE. Par ailleurs, pour permettre la communication entre OS et NE de différentes provenances, l'ITU-T est en voie de normaliser une interface de communication entre OS et NE dite interface Q3.

Le problème auquel s'adresse la présente invention a son origine dans le nombre élevé des types d'OS et de NE dans les grands réseaux de télécommunications modernes.

En effet, à cause entre autres de la multiplication des services offerts, les besoins de gestion des opérateurs s'accroissent considérablement, ce qui tend à multiplier le nombre d'OS, même si chaque OS supporte plusieurs applications de gestion. Par ailleurs, plus grand est le réseau de télécommunications, plus il comprend de types d'équipements variés (différents constructeurs, différentes générations de matériels, différents équipements aux fonctions techniques spécialisées, etc.).

La solution centralisée que l'on vient d'évoquer implique que chaque OS identifie individuellement les nombreux NE et connaissent les particularités de chacun d'eux. Elle implique tout aussi bien que chaque NE connaissent les nombreux services de gestion, identifie un OS supportant chacun de ces services et connaisse de même ses particularités. Le volume d'information à prévoir et à gérer dans les OS et NE est de ce fait considérable. En outre, chaque OS doit satisfaire tous les NE, tout comme chaque NE doit satisfaire tous les OS, en matière d'échange d'informations de gestion, ce qui multiplie le nombre de messages de gestion à transmettre par les uns comme par les autres.

Par ailleurs, le réseau de télécommunications évolue sans cesse, tandis que les opérations de gestion s'enrichissent continuellement. Cela entraîne un besoin de mise à jour fréquente des informations relatives au réseau de gestion des télécommunications tant dans les OS que dans les NE.

Or, il est clair que de telles mises à jour sont coûteuses, tant dans les moyens de mise en oeuvre que dans la charge qu'elles imposent sur les NE. Il importe de les limiter et de les simplifier.

Il a donc été proposé un système de gestion de télécommunications comprenant, à l'instar du réseau de transmission de signalisation incorporé dans les réseaux de télécommunications modernes, un point de transfert de messages de gestion, avec lequel communiquent, chacun selon ses propres spécificités, les OS comme les NE, et qui réalise les adaptations nécessaires. De la sorte, les OS et les NE n'ont plus à connaître leurs particularités respectives. Le point de transfert de messages de gestion prend également en charge le routage des messages et leur multiplication, en cas de pluralité de destinataires. Un tel système prend donc en charge, de façon centralisée et plus économique, tous les aspect complexes qui chargeaient considérablement les OS et les NE, comme on l'a indiqué précédemment. Dans un grand réseau, toutefois, cela conduit à ce que le point de transfert de messages de gestion soit lui-même volumineux et coûteux.

La présente invention vise à faire face à de telles situations et à permettre la gestion centralisée d'un grand réseau de télécommunications, d'une façon qui simplie encore un tel point de transfert de messages de gestion.

La présente invention a donc pour objet un système de gestion de télécommunications comprenant des centres de gestion fournissant les services de gestion, qui doivent communiquer, par des messages de gestion, dans les deux sens, avec des éléments de réseau de télécommunications d'un réseau de télécommunications, ainsi qu'un point de transfert de messages de gestion, avec lequel communiquent, chacun selon ses propres spécificités, les centres de gestion comme les éléments de réseau de télécommunications, qui réalise les adaptations nécessaires dans les transferts de messages de gestion entre centres de gestion et éléments de réseau de télécommunications et qui prend notamment en charge le routage des messages et leur multiplication, en cas de pluralité de destinataires.

Selon une caractéristique de l'invention, ledit point de transfert de message comprend plusieurs dispositifs de transfert de messages de gestion chacun d'eux desservant un ensemble d'applications de gestion et chaque élément de réseau de télécommunications associé à un ensemble d'applications de gestion possède une interface pour communiquer avec le dispositif de transfert de messages de gestion desservant cet ensemble.

Il est ainsi possible de constituer un ensemble d'applications intéressant une catégorie d'éléments de réseau de télécommunications seulement et d'associer une telle catégorie d'éléments de réseau de télécommunications à cet ensemble en prévoyant un dispositif de transfert de messages auquel seront couplés, d'une part, toutes les applications de l'ensemble et, d'autre part, tous les éléments de réseau de télécommunications de la catégorie en question, de sorte que le dispositif de transfert de messages n'aura à prendre en charge que les communications de gestion entre ces deux ensembles, ce qui permettra de l'optimiser et, finalement de réduire le coût du système de gestion de télécommunications. Additionnellement, cela permettra à l'exploitant de maîtriser les flux de données au niveau des NE, en les séparant et en permettant de les hiérarchiser, afin d'éviter la surcharge des NE. Cela accroîtra aussi la sécurité des transferts de données par la répartition de la charge sur plusieurs dispositifs de transfert de messages de gestion autonomes. Cela introduira enfin, sans coût additionnel une protection efficace du secret de l'information, certaines applications se voyant interdire l'accès à des informations protégées.

Selon une caractéristique additionnelle de l'invention, un ensemble d'applications est desservi par un seul dispositif de transfert de messages de gestion.

De la sorte, l'accès à l'ensemble d'applications considéré n'implique qu'un seul dispositif de transfert de messages de gestion, auquel chaque élément de réseau de télécommunications accède par une interface spécifique, ce qui simplifie encore le dispositif de transfert de message de gestion.

Selon une autre caractéristique de l'invention, les dispositifs de transfert de message de gestion sont de même type.

Selon une autre caractéristique de l'invention, les dispositifs de transfert de message de gestion sont des instanciations multiples d'un même objet.

Les différents objets et caractéristiques de l'invention seront maintenant détaillés dans la description qui va suivre d'un exemple de mise en oeuvre de l'invention, fourni à titre non limitatif, en se référant aux figures annexées qui représente :
- la figure 1, l'architecture d'un système de gestion des télécommunications conforme à la présente invention.
- la figure 2, un système de gestion des télécommunications comprenant plusieurs points de transferts de messages de gestion.

Comme représenté à la figure, le système de gestion de télécommunications SGT comprend des centres de gestion tels que CG1 fournissant des services de gestion, à l'aide d'applications AP1, APm, APk, qui doivent communiquer, par des messages de gestion, dans les deux sens, avec des éléments de réseau de télécommunications NE1, NEn, d'un réseau de télécommunications RT, ainsi qu'un point de transfert de messages de gestion PTMG, avec lequel communiquent, chacun selon ses propres spécificités, les centres de gestion comme les éléments de réseau de télécommunications, qui réalise les adaptations nécessaires dans les transferts de messages de gestion entre centres de gestion et éléments de réseau de télécommunications et qui prend notamment en charge le routage des messages et leur multiplication, en cas de pluralité de destinataires.

Avantageusement, ce point de transfert de messages de gestion sera également chargé de la sécurisation des données de gestion. Il sera donc doté d'une mémoire de masse sécurisée (par exemple par duplication des enregistrements, contrôle d'erreur et basculement d'un enregistrement sur l'autre en cas d'erreur). Une telle mémoire pourra conserver les données des messages en transit, jusqu'à leur retransmission complète, conserver la mémoire de tous les messages transmis durant une période donnée, par exemple pour pouvoir les répéter en cas de faute ultérieure dans les applications ou les éléments de réseau de télécommunications, ou encore-procéder au stockage de longue durée de ces données. Dans ce dernier cas, le point de transfert de message de gestion peut en arriver à découpler complètement les applications de gestion des éléments de réseau de télécommunications, recevant par exemple au fil de l'eau les données de taxation de centres de commutation d'abonnés, les stockant simplement sans les retransmettre, puis répondant lorsqu'elles se présentent aux demandes des applications de taxation, à partir des données enregistrées. Cela retire aux centres de commutation le soin de la conservation sécurisée de telles données, aussi bien que la charge de répondre en temps réel aux demandes des applications de gestion de taxation, pour confier ces fonctions, de façon centralisée, donc plus économique, au point de transfert de messages de gestion.

Le point de transfert de message PTMG comprend plusieurs dispositifs de transfert de messages de gestion DTMG1, DTMGk, chacun d'eux desservant un ensemble d'applications de gestion EAG1, EAGk et des éléments de réseau de télécommunications tels que NE1. Chaque élément de réseau de télécommunications NE1, NEn, associé à un ensemble d'applications de gestion possède une interface telle que IN1 pour communiquer avec le dispositif de transfert de messages de gestion desservant cet ensemble. Cette interface sera de préférence conforme à l'interface Q3 précédemment mentionnée. Dans chaque dispositif de transfert de messages de gestion, tel que DTMG1, une infrastructure de gestion de télécommunications IGT1, qui se présente comme un commutateur de messages de données classique, communique avec des éléments de réseau de télécommunications tels que NE1, chacun par l'intermédiaire d'une interface conforme telle que INT1, qui peut être également de type Q3. Les communications entre les applications telles que AP1, APm d'un même ensemble et l'infrastructure de gestion de télécommunications qui les dessert, IGT1, comprennent bien entendu des interfaces appropriées, qui n'ont pas été représentées pour simplifier, car elles sont classiques dans la technique ; il s'agira aussi de référence d'interfaces de type Q3.

L'ensemble d'applications de gestion EAG1 est implanté dans le centre de gestion CG1. Un deuxième ensemble, EAG2, desservi par un deuxième dispositif de transfert de messages de gestion, non représenté, peut être inclus dans le même centre de gestion CG1.

Un ensemble d'applications de gestion tel que EAG1 est composé à partir de service de gestion apparentés, du point de vue des éléments de réseau de télécommunications NE1, NEn du réseau de télécommunications RT. Par exemple, l'ensemble EAG1 peut comprendre les applications des services de taxation des communications. Il existera, par exemple, dans cet ensemble, une application de taxation par type de service de télécommunications (téléphonie classique, visiophonie, données, fax, etc.) Tous les éléments de réseau du réseau de télécommunications RT ne sont pas intéressés par la taxation. En règle générale, seuls les centres de commutation d'abonnés le sont, tandis que les centres de transit, les brasseurs de circuits, etc. ne le sont pas. Il existe donc une catégorie d'éléments de réseau de télécommunications tels que NE1 qui ont en commun d'être seuls intéressés par l'ensemble de services de taxation et qui doivent communiquer avec l'ensemble des applications de taxation EAG1. Les éléments de réseau de télécommunications de cette catégorie sont associés à cet ensemble d'applications de taxation par le dispositif de transfert de messages DTMG1 auquel sont couplées, d'une part, toutes les applications de l'ensemble, AP1, APm, et, d'autre part, tous les éléments de réseau de télécommunications de la catégorie en question, tels que NE1, de sorte que le dispositif de transfert de messages de gestion DTMG1 n'aura à prendre en charge que des communications de gestion relatives à la taxation et sera optimisé à cet égard.

De préférence, l'ensemble d'applications EAG1 est desservi par le seul dispositif de transfert de messages de gestion DTMG1. Vu d'un élément de réseau de télécommunications intéressé, tel que NE1, l'établissement d'une communication avec une application de cet ensemble consiste donc simplement à adresser un message sur l'interface IN1.

Un autre ensemble d'applications de gestion, tel que EAGk, comprendra, par exemple, les mesures de trafic, notamment l'application APk. Tous les éléments de réseau de télécommunications, à nouveau, ne sont pas intéressés par les mesures de trafic. Cela peut être le cas de brasseurs de circuits. Mais d'autres éléments de réseau de télécommunications seront intéressés à la fois par la taxation et les mesures de trafic et seront couplés aux deux dispositifs de transfert de messages de gestion DTMG1 et DTMGk, ce qui est le cas pour NE1, par deux interfaces différentes.

Dans la pratique, les dispositifs de transfert de message de gestion sont avantageusement tous d'un même type. D'un dispositif à l'autre seuls changent le dimensionnement et le paramétrage. Ils remplissent chacun, pour un groupe d'applications, les fonctions évoquées plus haut qui sont attribuées au point de transfert de messages de gestion.

Dans un réseau où le trafic de messages de gestion le permet, différents dispositifs de transferts de messages peuvent être implantés dans une même machine. Ces différents dispositifs seront avantageusement des instanciations multiples d'un même objet. Cela peut s'appliquer en particulier au niveau des infrastructures de transfert de messages de gestion telles que IGT1, IGTk.

Par ailleurs, les différentes applications desservies par un même dispositif de transfert de message seront avantageusement supportées par un même centre de gestion.

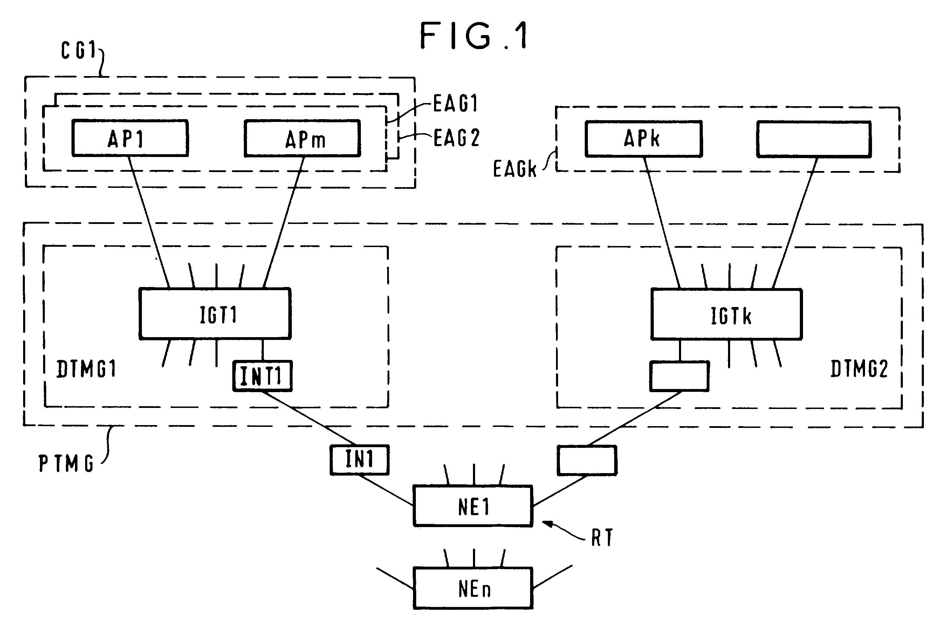

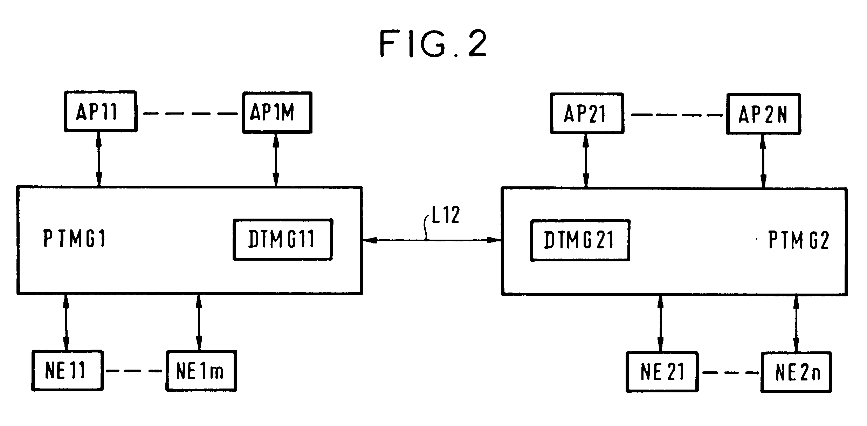

En se tournant maintenant vers la figure 2 on considérera le cas d'un réseau d'une ampleur telle qu'un seul point de transfert de messages de gestion ne soit plus suffisant. Dans ce cas, l'invention en prévoit plusieurs, interconnectés deux à deux. La figure 2, pour simplifier, illustre seulement le cas de deux points de transfert de messages de gestion, PTMG1 et PTMG2, interconnectés par la liaison LT12. Chacun d'eux est semblable au point de transfert PTMG de la figure 1. C'est ainsi que le point de transfert de message de gestion PTMG1 dessert des applications AP11 à AP1M et les éléments de réseau de télécommunications NE11 à NE1m, tandis que le point de transfert de messages de gestion PTMG2 dessert des applications de gestion AP21 à AP2N et des éléments de réseau de télécommunications NE21 à NE2n. Essentiellement, la liaison LT12 vise à permettre les transferts de messages de gestion entre les applications AP11 à AP1M et les éléments de réseau de télécommunications NE21 à NE2n, et/ou entre les applications AP21 à AP2N et les éléments de réseau de télécommunications NE11 à NE1m. A cette fin, par exemple, un ou plusieurs dispositifs de transfert de messages de gestion de chacun des points de transfert de messages de gestion PTMG1 et PTMG2 est connectable à la liaison LT12, par laquelle il peut transmettre ou recevoir des messages de gestion de façon adressable, au lieu de les transmettre à ou de les recevoir d'applications qui leur seraient directement couplées.

Plus précisément et à titre d'exemple, on a représenté un tel dispositif de transfert de message de gestion DTMG11 du point de transfert de messages de gestion PTMG11 et une tel dispositif de transfert de messages de gestion DTMG21 du point de transfert de message de gestion PTMG2. Lorsque le dispositif DTMG11 reçoit de l'élément de réseau de télécomunications NE11 un message de gestion dont le destinataire est l'application de gestion AP21, ce message est retransmis par le dispositif DTMG11 sur la liaison LT21, et adressé au dispositif DTMG21 qui se chargera de le transférer à l'application AP21. Dans ce cadre, le dispositif DTMG11 est un dispositif de transfert de messages de gestion semblables aux autres à l'égard des élément de réseau qu'il dessert, et accomplit toutes les fonctions déjà décrites, mais il ne comprend aucune application qui lui soit directement couplée ; aussi, au lieu de transmettre des messages de gestions vers de telles applications, il fournit les messages de gestion qu'il engendre sur la liaison LT12 et le dispositif de transfert de messages de gestion DTMG21 joue alors un rôle de relais de transmission, entre la liaison LT12 et les applications qui concernent le dispositif de transfert de messages de gestion DTMG11 mais ne sont accessibles que par le point de transfert de messages de gestion PTMG2.

Il est bien sur possible de prévoir un arrangement symétrique dans lequel le dispositif DTMG11 ne fait que retransmettre, sans aucune intervention, les messages de gestion des éléments de réseau de télécommunications qui lui sont attachés, le dispositif DTMG21 au contraire traitant complètement ces messages et accomplissant à leur sujet les fonctions décrites précédemment.

## Revendications

1. Système de gestion de télécommunications comprenant des centres de gestion (CG1) fournissant les services de gestion, qui communiquent, par des messages de gestion, dans les deux sens, avec des éléments de réseau de télécommunications (NE1, NEn...) d'un réseau de télécommunications (RT), ainsi qu'un point de transfert de messages de gestion, avec lequel communiquent, chacun selon ses propres spécificités, les centres de gestion comme les éléments de réseau de télécommunications, qui réalise les adaptations nécessaires dans les transferts de messages de gestion entre centres de gestion et éléments de réseau de télécommunications et qui prend notamment en charge le routage des messages et leur multiplication, en cas de pluralité de destinataires, caractérisé en ce que ledit point de transfert de message (PTMG ; PTMG1, PTMG2) comprend plusieurs dispositifs de transfert de messages de gestion (IGT1, IGT2, IGTk) chacun d'eux desservant un ensemble d'applications de gestion (EAG1, EAG2, EAGk) et en ce que chaque élément de réseau de télécommunications (NE1, NE....) associé à un ensemble d'applications de gestion (EAG1) possède une interface (IN1) pour communiquer avec le dispositif de transfert de messages de gestion (DTMG1) desservant cet ensemble.

2. Système de gestion de télécommunications conforme à la revendication 1 caractérisé en ce qu'un ensemble d'applications est desservi par un seul dispositif de transfert de messages de gestion.

3. Système de gestion de télécommunications conforme à la revendication 1 ou 2, caractérisé en ce que les dispositifs de transfert de message de gestion sont de même type.

4. Système de gestion de télécommunications conforme à la revendication 1, 2 ou 3, caractérisé en ce que les dispositifs de transfert de message de gestion sont des instanciations multiples d'un même objet.

5. Système de gestion de télécommunications conforme à la revendication 1, 2, 3 ou 4, caractérisé en ce que les applications desservies par un même dispositif de transfert de message sont supportées par un même centre de gestion.

6. Système de gestion de télécommunications conforme à l'une quelconque des revendications 1 à 5, caractérisé en ce que ledit point de transfert de message comprend des moyens de mémoire pour assurer à sécurisation des données de gestion véhiculées par les messages de gestion.

7. Système de gestion de télécommunications conforme à la revendication 6, caractérisé en ce que ladite sécurisation comprend l'enregistrement temporaire sécurisé des données des messages de gestion jusqu'à complète retransmission.

8. Système de gestion de télécommunications conforme à la revendication 6, caractérisé en ce que ladite sécurisation comprend l'enregistrement temporaire sécurisé des données des messages de gestion pendant une durée déterminée suffisante pour palier les défaillances dans la réception et le traitement des messages transmis.

9. Système de gestion de télécommunications conforme à la revendication 6, caractérisé en ce que ladite sécurisation comprend l'enregistrement sécurisé de longue durée des données reçues par ledit point de transfert de messages de gestion, ainsi que la retransmission différée des données ainsi stockées.

10. Système de gestion de télécommunications conforme à l'une quelconque des revendications 1 à 5, caractérisé en ce qu'il comprend un deuxième point de transfert de messages de gestion au moins, connecté au premier par une liaison de transmission de messages de gestion, permettant les transferts de messages de gestion entre les applications (AP11 à AP1M) de l'un d'entre eux (PTGM1) et les éléments de réseau de télécommunications (NE21 à NE2n) de l'autre (PTMG2) et réciproquement.
